# EUROPEAN PATENT SPECIFICATION

(11) **EP 3 550 745 B1**
(45) Date of publication and mention of the grant of the patent: **11.05.2022**
(21) Application number: 16925049.5
(22) Date of filing: 30.12.2016
(51) Int. Cl.: H04L 1/00

(54) **COMMUNICATION METHOD, NETWORK DEVICE, AND TERMINAL DEVICE**
KOMMUNIKATIONSVERFAHREN, NETZWERKVORRICHTUNG UND ENDGERÄTEVORRICHTUNG
PROCÉDÉ DE COMMUNICATION, DISPOSITIF DE RÉSEAU, ET DISPOSITIF TERMINAL

(43) Date of publication of application: 09.10.2019
(73) Proprietor: Huawei Technologies Co., Ltd., Longgang District Shenzhen, Guangdong 518129 (CN)
(72) Inventor: WANG, Yifan, Shenzhen Guangdong 518129 (CN); LIU, Qi, Shenzhen Guangdong 518129 (CN)
(74) Representative: Isarpatent
(86) International application number: PCT/CN2016/113698
(87) International publication number: WO 2018/120107

(56) References cited:
- CN-A- 101 729 227
- CN-A- 101 729 227
- CN-A- 102 594 533
- CN-A- 104 080 161
- US-A1- 2011 007 719
- US-A1- 2014 003 303

## Description

### TECHNICAL FIELD

Embodiments of the present invention relate to the communications field, and in particular, to a communication method, a network device, and a terminal device.

### BACKGROUND

In a current wireless communications system, after a receive end such as a network device or a terminal device obtains air interface data sent by a peer end (for example, a peer end of the network device is a terminal device, and a peer end of the terminal device is the network device), the receive end processes the air interface data within a specified time, and sends a feedback (which may also be referred to as a response) to the peer end after the specified time. A length of the specified time is referred to as a transmission time sequence of the receive end.

In the current wireless communications system, the transmission time sequence cannot be changed once being determined. However, in wireless communications, different transmission services may have varying requirements on a delay and a data processing capability. If a same transmission time sequence is used for communication, system performance is affected.

US 2014/003303 A1 relates to a method and a device for transmitting/receiving a signal in a system simultaneously supporting FDD (Frequency Division Duplex) and TDD (Time Division Duplex). More particularly, this document relates to a method and a device for a terminal to transmit an uplink signal according to a normal HARQ operation in a wireless communication system supporting a carrier merge.

### SUMMARY

Embodiments of the present invention provide a communication method, a network device, and a terminal device. Based on the method, a transmission time sequence of a terminal device can be flexibly determined based on different system configurations, to avoid a prior-art problem caused by a single transmission time sequence, and improve system performance.

According to a first aspect, a communication method is provided. The method includes:
obtaining, by a network device, state information of current communication with a terminal device;
determining, by the network device, a transmission time sequence of the terminal device based on the state information, where the transmission time sequence of the terminal device indicates duration from a time point at which the terminal device receives data to a time point at which the terminal device sends a response to the data; and
sending, by the network device to the terminal device, indication information used to indicate the transmission time sequence.

Therefore, in this embodiment of the present invention, the network device can determine the transmission time sequence for the terminal device based on the state information of the communication with the terminal device, and the network device can flexibly determine the transmission time sequence of the terminal device based on different state information, to avoid a prior-art problem caused by a single transmission time sequence, and improve system performance.

Optionally, in an implementation, the state information includes transmission service type information, data amount information of a current transmission service, load information of the network device, state information of the terminal device, or system configuration information.

A specific process in which the network device determines the transmission time sequence of the terminal based on the state information when the state information is different information is described below in different cases.

Optionally, in an implementation, the state information includes the transmission service type information; and
the determining, by the network device based on the state information, a transmission time sequence of the terminal device that corresponds to the state information includes:
when the service type information is first service type information, determining that the transmission time sequence is a first transmission time sequence; or
when the service type information is second service type information, determining that the transmission time sequence is a second transmission time sequence, where
a transmission delay of the first service type is shorter than a preset time threshold, a transmission delay of the second service type is higher than the preset time threshold, and duration of the first transmission time sequence is shorter than duration of the second transmission time sequence.

It should be understood that, the first service type may also be referred to as a service type having a relatively high requirement on latency, and may also be referred to as an emergency service type. For example, a service through which a user performs wireless control by using a terminal device belongs to the first service type. For example, if the terminal device controls an unmanned aerial vehicle by using a wireless network, to better implement wireless control, a low delay is required in the communication. The second service type may also be referred to as a non-emergency service type. For another example, a service through which a user browses a web page, sends an email, or transmits data in a web disk by using a terminal device may belong to the non-emergency service type.

For an emergency service, a shorter transmission time sequence may be used to reduce a transmission delay on an air interface, to improve system performance.

It should be understood that, in this embodiment of the present invention, the preset time threshold may be determined based on an actual scenario. This is not limited in this embodiment of the present invention. The first transmission time sequence may be, for example, two transmission time intervals (Transmission Time Interval, TTI), and the second transmission time sequence may be, for example, four TTIs. This embodiment of the present invention is not limited thereto.

It should be understood that, a case in which the service type information includes the first service type information and the second service type information is described above, but this embodiment of the present invention is not limited thereto. During actual application, the service type information may also include a plurality of types of service type information. Each type of service type information corresponds to one transmission time sequence. For example, the service type information includes N types of service type information, where N≥2, and correspondingly, may include N-1 time thresholds. The network device may determine a current transmission time sequence based on N transmission delays and current service type information by using the N-1 time thresholds.

Therefore, in this embodiment of the present invention, the network device can determine the transmission time sequence for the terminal device based on service type information of the communication with the terminal device, and the network device can flexibly determine the transmission time sequence of the terminal device based on different service type information, to avoid a prior-art problem caused by a single transmission time sequence, and improve system performance.

Optionally, in an implementation, the state information includes the data amount information of the current transmission service; and
the determining, by the network device based on the state information, a transmission time sequence of the terminal device that corresponds to the state information includes:
when a data amount of the current transmission service is less than a preset data amount threshold, determining that the transmission time sequence is a first transmission time sequence; or
when a data amount of the current transmission service is greater than the preset data amount threshold, determining that the transmission time sequence is a second transmission time sequence, where duration of the first transmission time sequence is shorter than duration of the second transmission time sequence.

It should be understood that, in this embodiment of the present invention, the preset data amount threshold may be determined based on an actual scenario. This is not limited in this embodiment of the present invention. The first transmission time sequence may be, for example, two TTIs, and the second transmission time sequence may be, for example, four TTIs. This embodiment of the present invention is not limited thereto.

Specifically, for a small transmission data amount, a low transmission delay may be used, to reduce a transmission time of a small-capacity data packet, and improve system performance. For a large data amount transmission, it is always limited by a hardware processing capability of a device and the like, and a long time is required for processing. Therefore, a long transmission time sequence is required. One transmission of a large-capacity data packet can be implemented by using the long transmission time sequence, to avoid or reduce occurrence of fragment transmission, and improve system performance.

It should be understood that, a case in which there is one data amount threshold is described above. During actual application, the network device may set a plurality of service data amount thresholds, for example, M-1 service data amount thresholds, where M≥2. Correspondingly, current service data amounts are classified into M types, and each type of current service data amount corresponds to one transmission time sequence. The network device may determine a current transmission time sequence based on M transmission delays and the current service data amount by using the M-1 service data amount thresholds.

Therefore, in this embodiment of the present invention, the network device can determine the transmission time sequence for the terminal device based on a current service data amount of the communication with the terminal device, and the network device can flexibly determine the transmission time sequence of the terminal device based on different current service data amounts, to avoid a prior-art problem caused by a single transmission time sequence, and improve system performance.

Optionally, in an implementation, the state information includes the load information of the network device; and
the determining, by the network device based on the state information, a transmission time sequence of the terminal device that corresponds to the state information includes:
when load of the network device is lower than a preset load threshold, determining that the transmission time sequence is a first transmission time sequence; or
when load of the network device is higher than a preset load threshold, determining that the transmission time sequence is a second transmission time sequence, where
duration of the first transmission time sequence is shorter than duration of the second transmission time sequence.

It should be understood that, in this embodiment of the present invention, the preset load threshold may be determined based on an actual scenario. This is not limited in this embodiment of the present invention. The first transmission time sequence may be, for example, two TTIs, and the second transmission time sequence may be, for example, four TTIs. This embodiment of the present invention is not limited thereto.

Specifically, when the load of the network device is high, the transmission time sequence of the terminal device may be prolonged, so that the network device can have a long processing time to reduce the load. If a current load of the network device is low, the transmission time sequence of the terminal device may be shortened, to reduce a transmission delay on an air interface, and improve system performance.

It should be understood that, a case in which there is one load threshold is described above. During actual application, for the service data amount threshold, a plurality of load thresholds, for example, K-1 load thresholds, may be included, where K≥2. Correspondingly, the load of the network device is classified into K types, and each type of load of the network device corresponds to one transmission time sequence. The network device may determine a current transmission time sequence based on K transmission delays and current load of the network device by using the K-1 load thresholds.

Therefore, in this embodiment of the present invention, the network device can determine the transmission time sequence for the terminal device based on the load of the network device when the network device communicates with the terminal device, and the network device can flexibly determine the transmission time sequence of the terminal device based on different load of the network device, to avoid a prior-art problem caused by a single transmission time sequence, and improve system performance.

Optionally, in an implementation, the state information includes the state information of the terminal device, and the state information of the terminal device includes information about a protocol version supported by the terminal device, channel quality information of the terminal device, a moving speed of the terminal device, or information about remaining transmit power of the terminal device; and
the determining, by the network device based on the state information, a transmission time sequence of the terminal device that corresponds to the state information includes:
when the state information of the terminal device is first-type state information, determining that the transmission time sequence is a first transmission time sequence; or
when the state information of the terminal device is second-type state information, determining that the transmission time sequence is a second transmission time sequence, where
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to the preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and duration of the first transmission time sequence is shorter than duration of the second transmission time sequence.

It should be understood that, in this embodiment of the present invention, the first transmission time sequence may be, for example, two TTIs, and the second transmission time sequence may be, for example, four TTIs. This embodiment of the present invention is not limited thereto.

Specifically, when the protocol version supported by the terminal device is low (earlier than the preset protocol version), the network device may determine a small transmission time sequence for the terminal device. In this way, a transmission time of a small data packet can be reduced to improve a user perception throughput. When the protocol version supported by the terminal device is high, the terminal device has a strong data processing capability. Therefore, a large transmission time sequence can be determined for the terminal device, so that a larger data packet can be transmitted in one transmission, thereby improving system performance.

When the remaining transmit power of the terminal device is low (lower than the preset power threshold), the data may fail to be transmitted, and may be successfully transmitted through a plurality of retransmissions. Therefore, the network device may determine a small transmission time sequence for the terminal device. In this way, a time of each transmission of a data packet can be reduced, to reduce a total time of data transmission and improve system performance. Similarly, when the transmit power of the terminal device is high, a possibility of success of one transmission is very high. Therefore, the network device may determine a large transmission time sequence for the terminal device. In this way, a large data packet can be transmitted in one transmission, occurrence of a plurality of fragment transmissions is avoided, a total time of data transmission is reduced, and system performance is improved.

When the channel quality of the terminal device is poor (lower than the preset quality threshold), the transmitted data may fail to be transmitted, and may be successfully transmitted through a plurality of retransmissions. Therefore, the network device may determine a small transmission time sequence for the terminal device. In this way, a time of each transmission of a data packet can be reduced, to reduce a total time of data transmission and improve system performance. Similarly, when the channel quality of the terminal device is good (higher than the preset quality threshold), a possibility of success of one transmission is very high. Therefore, the network device may determine a large transmission time sequence for the terminal device. In this way, a large data packet can be transmitted in one transmission, occurrence of a plurality of fragment transmissions is avoided, a total time of data transmission is reduced, and system performance is improved.

When the moving speed of the terminal device is high (higher than the preset quality threshold), the transmitted data may fail to be transmitted, and may be successfully transmitted through a plurality of retransmissions. Therefore, the network device may determine a small transmission time sequence for the terminal device. In this way, a time of each transmission of a data packet can be reduced, to reduce a total time of data transmission and improve system performance. Similarly, when the moving speed of the terminal device is low (lower than a preset speed threshold), a possibility of success of one transmission is very high. Therefore, the network device may determine a large transmission time sequence for the terminal device. In this way, a large data packet can be transmitted in one transmission, occurrence of a plurality of fragment transmissions is avoided, a total time of data transmission is reduced, and system performance is improved.

It should be understood that, for each type of state information of the terminal device, during actual application, the network device may set a plurality of corresponding thresholds. For example, for the remaining power of the terminal, the network device may set a plurality of power thresholds, for example, Z-1 power thresholds, where Z≥2. Correspondingly, the remaining transmit power of the terminal device is classified into Z types, and each type of remaining transmit power of the terminal device corresponds to one transmission time sequence. The network device may determine a current transmission time sequence based on Z transmission delays and current remaining transmit power of the terminal device by using the Z-1 power thresholds. Similarly, for each of the information about the protocol version supported by the terminal device, the channel quality information of the terminal device, and the moving speed of the terminal device, there may be a plurality of corresponding thresholds and a plurality of corresponding transmission time sequences. Herein, refer to the descriptions of the remaining transmit power of the terminal device, and details are not described herein again.

Therefore, in this embodiment of the present invention, the network device can determine the transmission time sequence for the terminal device based on the state information of the terminal device when communicating with the terminal device, and the network device can flexibly determine the transmission time sequence of the terminal device based on different current state information of the terminal device, to avoid a prior-art problem caused by a single transmission time sequence, and improve system performance.

Optionally, in an implementation, the state information includes the system configuration information; and
the determining, by the network device based on the state information, a transmission time sequence of the terminal device that corresponds to the state information includes:
determining the transmission time sequence based on the system configuration information, where the transmission time sequence is related to a type of the system configuration.

It should be understood that, in this embodiment of the present invention, a communications system or the network device may preset in a such a manner that different system configuration types correspond to different transmission time sequences.

For example, when the system configuration is a first-type configuration, it is determined that the transmission time sequence is a first transmission time sequence;
when the system configuration is a second-type configuration, it is determined that the transmission time sequence is a second transmission time sequence;
when the system configuration is a third-type configuration, it is determined that the transmission time sequence is a third transmission time sequence; or
when the system configuration is a fourth-type configuration, it is determined that the transmission time sequence is a fourth transmission time sequence; or the like.

The first to the fourth transmission time sequences are different from each other.

The first transmission time sequence may be, for example, one TTI, the second transmission time sequence may be, for example, two TTIs, the third transmission time sequence may be, for example, three TTIs, and the fourth transmission time sequence may be, for example, four TTIs. This embodiment of the present invention is not limited thereto.

It should be understood that, during actual application, there may be a plurality of system configurations. This embodiment of the present invention is not limited thereto. Duration of a transmission time sequence of each system configuration may be determined based on a specific scenario. This is not limited in this embodiment of the present invention.

It should be understood that, each system configuration may correspond to one type of numerology, and each system configuration may include, but is not limited to, at least one of the following configuration parameters: at least one cyclic prefix (Cyclic Prefix, CP) length, a subcarrier width, a subframe length, and a spectrum width for communication between the network device and the terminal device. For different types of system configurations, values of a parameter may be different, or values of a plurality of parameters may all be different. This is not limited in this embodiment of the present invention.

Therefore, in this embodiment of the present invention, the network device can determine the transmission time sequence for the terminal device based on a system configuration of the communication with the terminal device, and the network device can flexibly determine the transmission time sequence of the terminal device based on different system configurations, to avoid a prior-art problem caused by a single transmission time sequence, and improve system performance.

Optionally, in an implementation, the method further includes:
determining, by the network device, a transmission time sequence of the network device based on capability information of a baseband processing unit.

For example, the network device may determine the transmission time sequence of the network device based on the capability information of the baseband processing unit of the network device.

Specifically, for example, a scheduler module of the network device may determine the transmission time sequence of the network device based on a capability of the baseband processing unit.

After the terminal device and the network device both determine the corresponding transmission time sequences, the network device and the terminal device can perform communication based on the corresponding transmission time sequences.

Therefore, in this embodiment of the present invention, the network device can determine the transmission time sequence for the terminal device based on the state information of the communication with the terminal device, and the network device can flexibly determine the transmission time sequence of the terminal device based on different state information, to avoid a prior-art problem caused by a single transmission time sequence, and improve system performance.

According to a second aspect, a communication method is provided. The method includes:
obtaining, by a terminal device, indication information sent by a network device and used to indicate a transmission time sequence of the terminal device, where the transmission time sequence is determined by the network device based on state information of current communication with the terminal device, and the transmission time sequence of the terminal device indicates duration from a time point at which the terminal device receives data to a time point at which the terminal device sends a response to the data; and
determining, by the terminal device, the transmission time sequence based on the indication information.

Therefore, in this embodiment of the present invention, the terminal device can obtain the transmission time sequence of the terminal device that can be flexibly determined by the network device based on different state information, to avoid a prior-art problem caused by a single transmission time sequence, and improve system performance.

It should be understood that, the second aspect corresponds to the first aspect, the first aspect is performed by the network device, the second aspect may be performed by the terminal device, and for a corresponding feature of the method on a terminal device side and a corresponding beneficial effect, refer to corresponding descriptions of a network device side according to the first aspect. Therefore, for brevity, detailed descriptions are properly omitted.

Optionally, in an implementation, the state information includes transmission service type information, data amount information of a current transmission service, load information of the network device, state information of the terminal device, or system configuration information.

Optionally, in an implementation, the state information includes the transmission service type information; and
when the service type information is first service type information, the transmission time sequence is a first transmission time sequence; or
when the service type information is second service type information, the transmission time sequence is a second transmission time sequence, where
a transmission delay of the first service type is shorter than a preset time threshold, a transmission delay of the second service type is higher than the preset time threshold, and duration of the first transmission time sequence is shorter than duration of the second transmission time sequence.

Optionally, in an implementation, the state information includes the data amount information of the current transmission service; and
when a data amount of the current transmission service is less than a preset data amount threshold, the transmission time sequence is a first transmission time sequence; or
when a data amount of the current transmission service is greater than the preset data amount threshold, the transmission time sequence is a second transmission time sequence, where duration of the first transmission time sequence is shorter than duration of the second transmission time sequence.

Optionally, in an implementation, the state information includes the load information of the network device; and
when load of the network device is lower than a preset load threshold, the transmission time sequence is a first transmission time sequence; or
when load of the network device is higher than a preset load threshold, the transmission time sequence is a second transmission time sequence, where
duration of the first transmission time sequence is shorter than duration of the second transmission time sequence.

Optionally, in an implementation, the state information includes the state information of the terminal device, and the state information of the terminal device includes information about a protocol version supported by the terminal device, channel quality information of the terminal device, a moving speed of the terminal device, or information about remaining transmit power of the terminal device; and
when the state information of the terminal device is first-type state information, the transmission time sequence is a first transmission time sequence; or
when the state information of the terminal device is second-type state information, the transmission time sequence is a second transmission time sequence, where
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to the preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and
duration of the first transmission time sequence is shorter than duration of the second transmission time sequence.

Optionally, in an implementation, before the obtaining, by a terminal device, indication information sent by a network device and used to indicate a transmission time sequence of the terminal device, the method further includes:
sending, by the terminal device, the state information of the terminal device to the network device.

Optionally, in an implementation, the state information includes the system configuration information; and the transmission time sequence is related to a type of the system configuration.

According to a third aspect, a network device is provided. The network device is configured to perform the method according to any one of the first aspect and the possible implementations of the first aspect. Specifically, the network device includes units configured to perform the foregoing method.

It should be understood that, the third aspect corresponds to the first aspect, and for a function of each unit in the network device and a corresponding beneficial effect, refer to corresponding descriptions of the method according to any one of the first aspect and the possible implementations of the first aspect. Therefore, for brevity, detailed descriptions are properly omitted.

According to a fourth aspect, a terminal device is provided. The terminal device is configured to perform the method according to any one of the second aspect and the possible implementations of the second aspect. Specifically, the terminal device includes units configured to perform the foregoing method.

It should be understood that, the fourth aspect corresponds to the second aspect, and for a function of each unit in the terminal device and a corresponding beneficial effect, refer to corresponding descriptions of the method according to any one of the second aspect and the possible implementations of the second aspect. Therefore, for brevity, detailed descriptions are properly omitted.

According to a fifth aspect, a network device is provided. The network device includes a processor and a memory. The memory is configured to store a computer program. The processor is configured to execute the computer program stored in the memory, to perform the method according to any one of the first aspect and the possible implementations of the first aspect.

It should be understood that, the fifth aspect corresponds to the first aspect, and for a function of the processor in the network device and a corresponding beneficial effect, refer to corresponding descriptions of the method according to any one of the first aspect and the possible implementations of the first aspect. Therefore, for brevity, detailed descriptions are properly omitted.

According to a sixth aspect, a terminal device is provided. The terminal device includes a processor and a memory. The memory is configured to store a computer program. The processor is configured to execute a computer program stored in the memory, to perform the method according to any one of the second aspect and the possible implementations of the second aspect.

It should be understood that, the sixth aspect corresponds to the second aspect, and for a function of each unit in the terminal device and a corresponding beneficial effect, refer to corresponding descriptions of the method according to any one of the second aspect and the possible implementations of the second aspect. Therefore, for brevity, detailed descriptions are properly omitted.

According to a seventh aspect, a computer readable medium is provided. The computer readable medium is configured to store a computer program. The computer program includes an instruction used to perform the method according to any one of the first aspect and the possible implementations of the first aspect.

It should be understood that, the seventh aspect corresponds to the first aspect, and for a method that can be implemented by the instruction stored in the computer readable medium and a corresponding beneficial effect, refer to corresponding descriptions of the method according to any one of the first aspect and the possible implementations of the first aspect. Therefore, for brevity, detailed descriptions are properly omitted.

According to an eighth aspect, a computer readable medium is provided. The computer readable medium is configured to store a computer program. The computer program includes an instruction used to perform the method according to any one of the second aspect and the possible implementations of the second aspect.

It should be understood that, the eighth aspect corresponds to the second aspect, and for a method that can be implemented by the instruction stored in the computer readable medium and a corresponding beneficial effect, refer to corresponding descriptions of the method according to any one of the second aspect and the possible implementations of the second aspect. Therefore, for brevity, detailed descriptions are properly omitted.

### BRIEF DESCRIPTION OF DRAWINGS

FIG. 1 is a scenario diagram of a communications system to which an embodiment of the present invention is applicable;
FIG. 2 is a flowchart of a communication method;
FIG. 3 is a flowchart of a communication method according to another embodiment of the present invention;
FIG. 4 is a schematic block diagram of a network device according to an embodiment of the present invention;
FIG. 5 is a schematic block diagram of a terminal device according to an embodiment of the present invention;
FIG. 6 is a schematic block diagram of a network device according to another embodiment of the present invention; and
FIG. 7 is a schematic block diagram of a terminal device according to another embodiment of the present invention.

### DESCRIPTION OF EMBODIMENTS

The following describes technical solutions in embodiments of the present invention with reference to accompanying drawings.

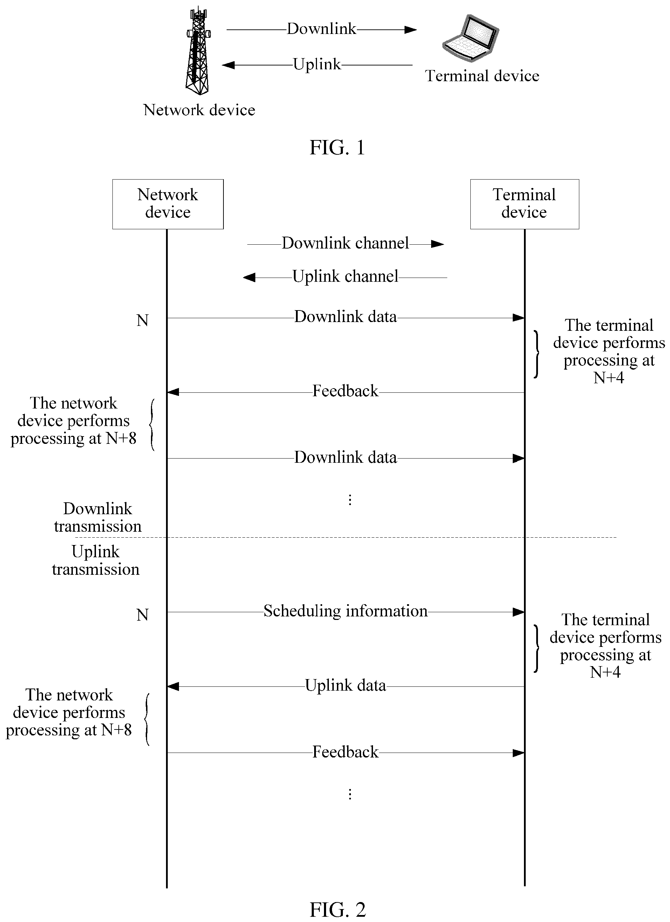

FIG. 1 is a scenario diagram of a communications system to which an embodiment of the present invention is applicable. In FIG. 1, the communications system includes a network device and a terminal device. The network device and the terminal device perform uplink and downlink wireless communication by using an air interface resource.

It should be understood that, this embodiment of the present invention is applicable to various communications systems. Therefore, the following descriptions are not limited to a particular communications system. For example, this embodiment of the present invention may be applied to a Global System for Mobile Communications (Global System of Mobile communication, "GSM" for short), a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short) system, a Universal Mobile Telecommunications System (Universal Mobile Telecommunication System, "UMTS" for short), or the like.

The terminal device in this embodiment of the present invention may also be referred to as user equipment (UE, User Equipment), an access terminal, a subscriber unit, a subscriber station, a mobile station, a mobile console, a remote station, a remote terminal, a mobile device, a user terminal, a terminal, a wireless communications device, a user agent, a user apparatus, or the like. The access terminal may be a cellular phone, a cordless phone, a SIP (Session Initiation Protocol, Session Initiation Protocol) phone, a WLL (Wireless Local Loop, wireless local loop) station, a PDA (Personal Digital Assistant, personal digital assistant), a handheld device having a wireless communication function, a computing device, another processing device connected to a wireless modem, an in-vehicle device, a wearable device, or a terminal device in a future 5G network.

In this embodiment of the present invention, the network device may be a network side device or another device that is configured to communicate with a mobile device, and the network side device may be a BTS (Base Transceiver Station, base transceiver station) in GSM (Global System of Mobile communication, Global System for Mobile Communications) or CDMA (Code Division Multiple Access, Code Division Multiple Access), a NB (NodeB, NodeB) in WCDMA (Wideband Code Division Multiple Access, Wideband Code Division Multiple Access), an eNB or an eNodeB (Evolutional NodeB, evolved NodeB) in LTE (Long Term Evolution, Long Term Evolution), a repeater station, an access point, an in-vehicle device, a wearable device, or a network side device in a future 5G network.

FIG. 2 is a schematic diagram of an existing communication method. For example, an LTE protocol is used as an example. A transmission time sequence of a network device is four subframes (ms), and a transmission time sequence of a terminal device is also four subframes.

During downlink transmission, at a moment N, the network device transmits downlink data through a downlink channel such as a physical downlink shared channel (Physical Downlink Shared Channel, PDSCH). After the terminal device processes the downlink data within a time of the transmission time sequence (four subframes), at a moment N+4, the terminal device sends a feedback (acknowledge, ACK) to the network device through an uplink channel such as a physical uplink shared channel (Physical Uplink Shared Channel, PUSCH) or a physical uplink control channel (Physical Uplink Control CHannel, PUCCH). When the feedback indicates that reception by the terminal device fails, after processing the feedback within a time of the transmission time sequence (four subframes), the network device retransmits the downlink data at a moment N+8. For example, the network device retransmits the downlink data by using a hybrid automatic repeat request (Hybrid Automatic Repeat reQuest, HARQ).

Similarly, during uplink transmission, first, at the moment N, the network device sends scheduling information through a downlink channel such as a physical downlink control channel (Physical Downlink Control Channel, PDCCH). After the terminal device processes the scheduling information within a time of the transmission time sequence (four subframes), at the moment N+4, the terminal device sends uplink data to the network device through an uplink channel such as a PUSCH. After the network device processes the uplink data within a time of the transmission time sequence (four subframes), at the moment N+8, the network device sends a feedback (acknowledge, ACK) to the terminal device through a downlink channel, for example, a PDCCH channel.

However, in the current communications system, a transmission time sequence cannot be changed once being determined. In an actual operation scenario, different services always have varying requirements on a delay and a data processing capability. Therefore, use of a fixed processing capability and delay affects system performance.

For example, for a low delay service, a longer transmission time sequence causes an increase in a transmission delay of the service data, affecting system performance.

For another example, for a service with a large data amount, when a transmission time sequence is short, an entire data packet needs to be transmitted by using a plurality of fragments. Consequently, a transmission delay of the data packet is increased, affecting system performance.

Based on a prior-art problem, an embodiment of the present invention provides a method for determining a transmission time sequence, to flexibly determine a transmission time sequence based on different transmission state information, thereby resolving the prior-art problem.

For ease of understanding and description, by way of example, and not limitation, a process and an action of performing the method for determining a transmission time sequence in this application in a communications system is described below.

It should be understood that, in this embodiment of the present invention, the transmission time sequence of the terminal device indicates duration from a time point at which the terminal device receives data to a time point at which the terminal device sends a response to the data. Similarly, the transmission time sequence of the network device indicates duration from a time point at which the network device receives data to a time point at which the network device sends a response to the data.

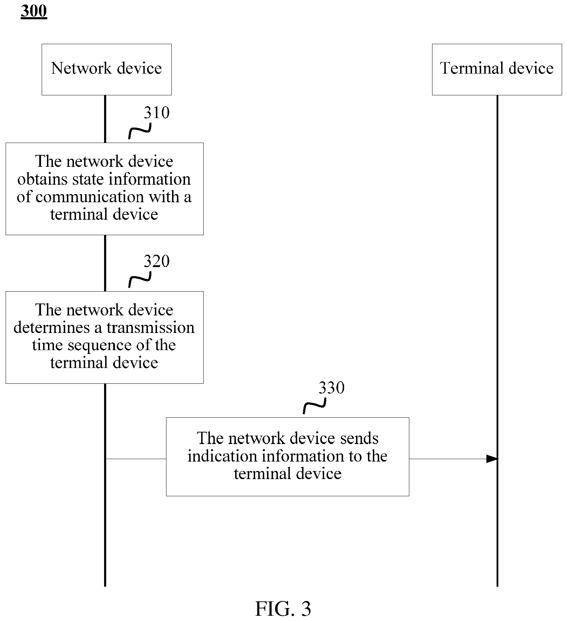

FIG. 3 is a schematic diagram of a communication method according to an embodiment of the present invention. The method shown in FIG. 3 is applicable to the foregoing communications systems. A communications system in this embodiment of the present invention may include a network device and a terminal device. Specifically, the method 300 shown in FIG. 3 includes the following steps.

310: The network device obtains state information for communication with the terminal device.

Specifically, the network device obtains the state information used to determine a transmission time sequence of the terminal device.

Optionally, the state information may include transmission service type information, data amount information of a current transmission service, load information of the network device, state information of the terminal device, system configuration information, or the like.

It should be understood that, the state information may be obtained by the network device by reading a system configuration, or may be obtained in a process of communicating with the terminal device. A method for obtaining the state information is not limited in this embodiment of the present invention.

For example, when the state information is the state information of the terminal device, in 310, the network device receives the state information of the terminal device sent by the terminal device, or the state information of the terminal device is determined by the network device by measuring a corresponding signal. This embodiment of the present invention is not limited thereto.

320: The network device determines a transmission time sequence of the terminal device.

Specifically, the network device determines the transmission time sequence of the terminal device based on the state information. The transmission time sequence of the terminal device indicates duration from a time point at which the terminal device receives data to a time point at which the terminal device sends a response to the data.

That the state information may include a plurality of types of information is described above. A specific process in which the network device determines the transmission time sequence of the terminal based on the state information when the state information is different information is described below in different cases.

### Case 1:

The state information includes the transmission service type information; and
the determining, by the network device based on the state information, a transmission time sequence of the terminal device that corresponds to the state information includes:
when the service type information is first service type information, determining that the transmission time sequence is a first transmission time sequence; or
when the service type information is second service type information, determining that the transmission time sequence is a second transmission time sequence, where
a transmission delay of the first service type is shorter than a preset time threshold, a transmission delay of the second service type is higher than the preset time threshold, and duration of the first transmission time sequence is shorter than duration of the second transmission time seq uence.

It should be understood that, the first service type may also be referred to as a service type having a relatively high requirement on latency, and may also be referred to as an emergency service type. For example, a service through which a user performs wireless control by using a terminal device belongs to the first service type. For example, if the terminal device controls an unmanned aerial vehicle by using a wireless network, to better implement wireless control, a low delay is required in the communication. The second service type may also be referred to as a non-emergency service type. For another example, a service through which a user browses a web page, sends an email, or transmits data in a web disk by using a terminal device may belong to the non-emergency service type.

For an emergency service, a shorter transmission time sequence may be used to reduce a transmission delay on an air interface, to improve system performance.

It should be understood that, in this embodiment of the present invention, the preset time threshold may be determined based on an actual scenario. This is not limited in this embodiment of the present invention. The first transmission time sequence may be, for example, two TTIs, and the second transmission time sequence may be, for example, four TTIs. This embodiment of the present invention is not limited thereto.

It should be understood that, a case in which the service type information includes the first service type information and the second service type information is described above, but this embodiment of the present invention is not limited thereto. During actual application, the service type information may also include a plurality of types of service type information. Each type of service type information corresponds to one transmission time sequence. For example, the service type information includes N types of service type information, where N≥2, and correspondingly may include N-1 time thresholds. The network device may determine a current transmission time sequence based on N transmission delays and current service type information by using the N-1 time thresholds.

Therefore, in this embodiment of the present invention, the network device can determine the transmission time sequence for the terminal device based on service type information of the communication with the terminal device, and the network device can flexibly determine the transmission time sequence of the terminal device based on different service type information, to avoid a prior-art problem caused by a single transmission time sequence, and improve system performance.

### Case 2:

The state information includes the data amount information of the current transmission service; and
the determining, by the network device based on the state information, a transmission time sequence of the terminal device that corresponds to the state information includes:
when a data amount of the current transmission service is less than a preset data amount threshold, determining that the transmission time sequence is a first transmission time sequence; or
when a data amount of the current transmission service is greater than the preset data amount threshold, determining that the transmission time sequence is a second transmission time sequence, where duration of the first transmission time sequence is shorter than duration of the second transmission time sequence.

It should be understood that, in this embodiment of the present invention, the preset data amount threshold may be determined based on an actual scenario. This is not limited in this embodiment of the present invention. The first transmission time sequence may be, for example, two TTIs, and the second transmission time sequence may be, for example, four TTIs. This embodiment of the present invention is not limited thereto.

Specifically, for a small transmission data amount, a low transmission delay may be used, to reduce a transmission time of a small-capacity data packet, and improve system performance. For a large data amount transmission, it is always limited by a hardware processing capability of a device and the like, and a long time is required for processing. Therefore, a long transmission time sequence is required. One transmission of a large-capacity data packet can be implemented by using the long transmission time sequence, to avoid or reduce occurrence of fragment transmission, and improve system performance.

It should be understood that, a case in which there is one data amount threshold is described above. During actual application, the network device may set a plurality of service data amount thresholds, for example, M-1 service data amount thresholds, where M≥2. Correspondingly, current service data amounts are classified into M types, and each type of current service data amount corresponds to one transmission time sequence. The network device may determine a current transmission time sequence based on M transmission delays and the current service data amount by using the M-1 service data amount thresholds.

Therefore, in this embodiment of the present invention, the network device can determine the transmission time sequence for the terminal device based on a current service data amount of the communication with the terminal device, and the network device can flexibly determine the transmission time sequence of the terminal device based on different current service data amounts, to avoid a prior-art problem caused by a single transmission time sequence, and improve system performance.

### Case 3:

The state information includes the load information of the network device; and
the determining, by the network device based on the state information, a transmission time sequence of the terminal device that corresponds to the state information includes:
when load of the network device is lower than a preset load threshold, determining that the transmission time sequence is a first transmission time sequence; or
when load of the network device is higher than a preset load threshold, determining that the transmission time sequence is a second transmission time sequence, where
duration of the first transmission time sequence is shorter than duration of the second transmission time sequence.

It should be understood that, in this embodiment of the present invention, the preset load threshold may be determined based on an actual scenario. This is not limited in this embodiment of the present invention. The first transmission time sequence may be, for example, two TTIs, and the second transmission time sequence may be, for example, four TTIs. This embodiment of the present invention is not limited thereto.

Specifically, when the load of the network device is high, the transmission time sequence of the terminal device may be prolonged, so that the network device can have a long processing time to reduce the load. If a current load of the network device is low, the transmission time sequence of the terminal device may be shortened, to reduce a transmission delay on an air interface, and improve system performance.

It should be understood that, a case in which there is one load threshold is described above. During actual application, for the service data amount threshold, a plurality of load thresholds, for example, K-1 load thresholds, may be included, where K≥2. Correspondingly, the load of the network device is classified into K types, and each type of load of the network device corresponds to one transmission time sequence. The network device may determine a current transmission time sequence based on K transmission delays and current load of the network device by using the K-1 load thresholds.

Therefore, in this embodiment of the present invention, the network device can determine the transmission time sequence for the terminal device based on the load of the network device when the network device communicates with the terminal device, and the network device can flexibly determine the transmission time sequence of the terminal device based on different load of the network device, to avoid a prior-art problem caused by a single transmission time sequence, and improve system performance.

### Case 4:

The state information includes the state information of the terminal device, and the state information of the terminal device includes information about a protocol version supported by the terminal device, channel quality information of the terminal device, a moving speed of the terminal device, or information about remaining transmit power of the terminal device; and
the determining, by the network device based on the state information, a transmission time sequence of the terminal device that corresponds to the state information includes:
when the state information of the terminal device is first-type state information, determining that the transmission time sequence is a first transmission time sequence; or
when the state information of the terminal device is second-type state information, determining that the transmission time sequence is a second transmission time sequence, where
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to the preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and duration of the first transmission time sequence is shorter than duration of the second transmission time sequence.

It should be understood that, in this embodiment of the present invention, the first transmission time sequence may be, for example, two TTIs, and the second transmission time sequence may be, for example, four TTIs. This embodiment of the present invention is not limited thereto.

Specifically, when the protocol version supported by the terminal device is low (earlier than the preset protocol version), the network device may determine a small transmission time sequence for the terminal device. In this way, a transmission time of a small data packet can be reduced to improve a user perception throughput. When the protocol version supported by the terminal device is high, the terminal device has a strong data processing capability. Therefore, a large transmission time sequence can be determined for the terminal device, so that a large data packet can be transmitted in one transmission, thereby improving system performance.

When the remaining transmit power of the terminal device is low (lower than the preset power threshold), the transmitted data may fail to be transmitted, and may be successfully transmitted through a plurality of retransmissions. Therefore, the network device may determine a small transmission time sequence for the terminal device. In this way, a time of each transmission of a data packet can be reduced, to reduce a total time of data transmission and improve system performance. Similarly, when the transmit power of the terminal device is high, a possibility of success of one transmission is very high. Therefore, the network device may determine a large transmission time sequence for the terminal device. In this way, a large data packet can be transmitted in one transmission, occurrence of a plurality of fragment transmissions is avoided, a total time of data transmission is reduced, and system performance is improved.

When the channel quality of the terminal device is poor (lower than the preset quality threshold), the transmitted data may fail to be transmitted, and may be successfully transmitted through a plurality of retransmissions. Therefore, the network device may determine a small transmission time sequence for the terminal device. In this way, a time of each transmission of a data packet can be reduced, to reduce a total time of data transmission and improve system performance. Similarly, when the channel quality of the terminal device is good (higher than the preset quality threshold), a possibility of success of one transmission is very high. Therefore, the network device may determine a large transmission time sequence for the terminal device. In this way, a large data packet can be transmitted in one transmission, occurrence of a plurality of fragment transmissions is avoided, a total time of data transmission is reduced, and system performance is improved.

When the moving speed of the terminal device is high (higher than the preset quality threshold), the transmitted data may fail to be transmitted, and may be successfully transmitted through a plurality of retransmissions. Therefore, the network device may determine a small transmission time sequence for the terminal device. In this way, a time of each transmission of a data packet can be reduced, to reduce a total time of data transmission and improve system performance. Similarly, when the moving speed of the terminal device is low (lower than a preset speed threshold), a possibility of success of one transmission is very high. Therefore, the network device may determine a large transmission time sequence for the terminal device. In this way, a large data packet can be transmitted in one transmission, occurrence of a plurality of fragment transmissions is avoided, a total time of data transmission is reduced, and system performance is improved.

It should be understood that, for each type of state information of the terminal device, during actual application, the network device may set a plurality of corresponding thresholds. For example, for the remaining power of the terminal, the network device may set a plurality of power thresholds, for example, Z-1 power thresholds, where Z≥2. Correspondingly, the remaining transmit power of the terminal device is classified into Z types, and each type of remaining transmit power of the terminal device corresponds to one transmission time sequence. The network device may determine a current transmission time sequence based on Z transmission delays and current remaining transmit power of the terminal device by using the Z-1 power thresholds. Similarly, for each of the information about the protocol version supported by the terminal device, the channel quality information of the terminal device, and the moving speed of the terminal device, there may be a plurality of corresponding thresholds and a plurality of corresponding transmission time sequences. Herein, refer to the descriptions of the remaining transmit power of the terminal device, and details are not described herein again.

Therefore, in this embodiment of the present invention, the network device can determine the transmission time sequence for the terminal device based on the state information of the terminal device when communicating with the terminal device, and the network device can flexibly determine the transmission time sequence of the terminal device based on different current state information of the terminal device, to avoid a prior-art problem caused by a single transmission time sequence, and improve system performance.

### Case 5:

The state information includes the system configuration information; and
the determining, by the network device based on the state information, a transmission time sequence of the terminal device that corresponds to the state information includes:
determining the transmission time sequence based on the system configuration information, where the transmission time sequence is related to a type of the system configuration.

It should be understood that, in this embodiment of the present invention, a communications system or the network device may preset in a such a manner that different system configuration types correspond to different transmission time sequences.

For example, when the system configuration is a first-type configuration, it is determined that the transmission time sequence is a first transmission time sequence;
when the system configuration is a second-type configuration, it is determined that the transmission time sequence is a second transmission time sequence;
when the system configuration is a third-type configuration, it is determined that the transmission time sequence is a third transmission time sequence; or
when the system configuration is a fourth-type configuration, it is determined that the transmission time sequence is a fourth transmission time sequence; or the like.

The first to the fourth transmission time sequences are different from each other.

The first transmission time sequence may be, for example, one TTI, the second transmission time sequence may be, for example, two TTIs, the third transmission time sequence may be, for example, three TTIs, and the fourth transmission time sequence may be, for example, four TTIs. This embodiment of the present invention is not limited thereto.

It should be understood that, during actual application, there may be a plurality of system configurations. This embodiment of the present invention is not limited thereto. Duration of a transmission time sequence of each system configuration may be determined based on a specific scenario. This is not limited in this embodiment of the present invention.

It should be understood that, each system configuration may correspond to one type of numerology, and each system configuration may include, but is not limited to, at least one of the following configuration parameters: a cyclic prefix (Cyclic Prefix, CP) length, a subcarrier width, a subframe length, and a spectrum width for communication between the network device and the terminal device. For different types of system configurations, values of a parameter may be different, or values of a plurality of parameters may all be different. This is not limited in this embodiment of the present invention.

Therefore, in this embodiment of the present invention, the network device can determine the transmission time sequence for the terminal device based on a system configuration of the communication with the terminal device, and the network device can flexibly determine the transmission time sequence of the terminal device based on different system configurations, to avoid a prior-art problem caused by a single transmission time sequence, and improve system performance.

330: The network device sends indication information to the terminal device.

Specifically, the network device sends, to the terminal device, the indication information used to indicate the transmission time sequence.

For example, the network device sends the indication information by using a scheduling grant message or a Radio Resource Control Protocol (Radio Resource Control, RRC) message.

After obtaining the indication information, the terminal device can determine the transmission time sequence of the terminal device based on the indication information, so that the terminal device can communicate with the network device based on the transmission time sequence.

A specific process in which the network device determines the transmission time sequence of the terminal device, and indicates the transmission time sequence of the terminal device by using the indication information is described above. It should be understood that, in this embodiment of the present invention, the network device may determine a transmission time sequence corresponding to the network device.

For example, the network device may determine the transmission time sequence of the network device based on the capability information of the baseband processing unit of the network device.

Specifically, for example, a scheduler module of the network device may determine the transmission time sequence of the network device based on a capability of the baseband processing unit.

After the terminal device and the network device both determine the corresponding transmission time sequences, the network device and the terminal device can perform communication based on the corresponding transmission time sequences.

Therefore, in this embodiment of the present invention, the network device can determine the transmission time sequence for the terminal device based on the state information of the communication with the terminal device, and the network device can flexibly determine the transmission time sequence of the terminal device based on different state information, to avoid a prior-art problem caused by a single transmission time sequence, and improve system performance.

The communication method in this embodiment of the present invention is described in detail above with reference to FIG. 1 to FIG. 3. It should be noted that, examples in FIG. 1 to FIG. 3 are merely intended to help a person skilled in the art understand this embodiment of the present invention, but are not intended to limit this embodiment of the present invention to a specific value or a specific scenario that is illustrated. A person skilled in the art apparently can make various equivalent modifications or changes according to the examples shown in FIG. 1 to FIG. 3, and such modifications or changes also fall within the scope of the embodiments of the present invention.

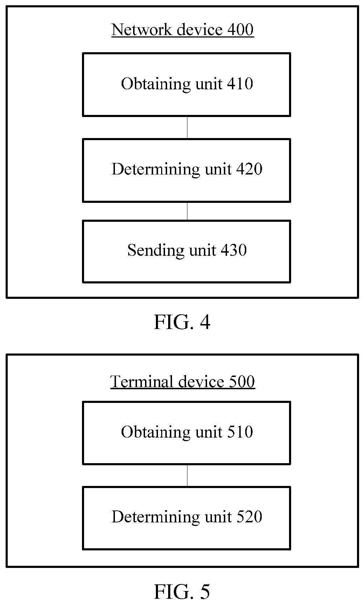

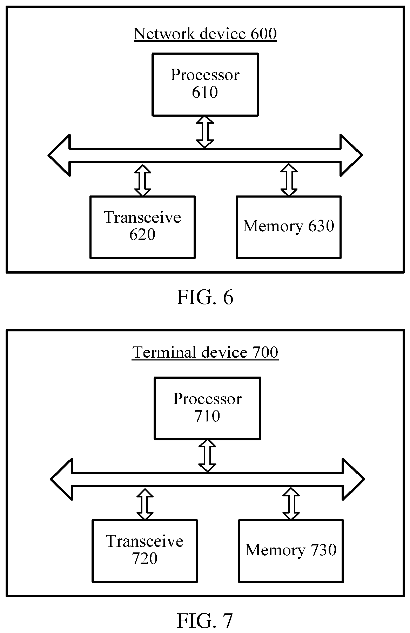

A network device in an embodiment of the present invention is described below with reference to FIG. 4 and FIG. 6, and a terminal device in an embodiment of the present invention is described with reference to FIG. 4 and FIG. 7.

FIG. 4 is a schematic block diagram of a network device 400 according to an embodiment of the present invention. Specifically, as shown in FIG. 4, the network device 400 includes:
an obtaining unit 410, configured to obtain state information of current communication with a terminal device;
a determining unit 420, configured to determine a transmission time sequence of the terminal device based on the state information, where the transmission time sequence of the terminal device indicates duration from a time point at which the terminal device receives data to a time point at which the terminal device sends a response to the data; and
a sending unit 430, configured to send, to the terminal device, indication information used to indicate the transmission time sequence.

Therefore, in this embodiment of the present invention, the network device can determine the transmission time sequence for the terminal device based on the state information of the communication with the terminal device, and the network device can flexibly determine the transmission time sequence of the terminal device based on different state information, to avoid a prior-art problem caused by a single transmission time sequence, and improve system performance.

Optionally, in another embodiment, the state information includes transmission service type information, data amount information of a current transmission service, load information of the network device, state information of the terminal device, or system configuration information.

Optionally, in another embodiment, the state information includes the transmission service type information; and the determining unit is specifically configured to:
when the service type information is first service type information, determine that the transmission time sequence is a first transmission time sequence; or
when the service type information is second service type information, determine that the transmission time sequence is a second transmission time sequence, where
a transmission delay of the first service type is shorter than a preset time threshold, a transmission delay of the second service type is higher than the preset time threshold, and duration of the first transmission time sequence is shorter than duration of the second transmission time sequence.

Alternatively, in another embodiment, the state information includes the data amount information of the current transmission service; and the determining unit is specifically configured to:
when a data amount of the current transmission service is less than a preset data amount threshold, determine that the transmission time sequence is a first transmission time sequence; or
when a data amount of the current transmission service is greater than the preset data amount threshold, determine that the transmission time sequence is a second transmission time sequence, where duration of the first transmission time sequence is shorter than duration of the second transmission time sequence.

Alternatively, in another embodiment, the state information includes the load information of the network device; and the determining unit is specifically configured to:
when load of the network device is lower than a preset load threshold, determine that the transmission time sequence is a first transmission time sequence; or
when load of the network device is higher than a preset load threshold, determine that the transmission time sequence is a second transmission time sequence, where
duration of the first transmission time sequence is shorter than duration of the second transmission time sequence.

Alternatively, in another embodiment, the state information includes the state information of the terminal device, and the state information of the terminal device includes information about a protocol version supported by the terminal device, channel quality information of the terminal device, a moving speed of the terminal device, or information about remaining transmit power of the terminal device; and the determining unit is specifically configured to:
when the state information of the terminal device is first-type state information, determine that the transmission time sequence is a first transmission time sequence; or
when the state information of the terminal device is second-type state information, determine that the transmission time sequence is a second transmission time sequence, where
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to the preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and duration of the first transmission time sequence is shorter than duration of the second transmission time sequence.

Alternatively, in another embodiment, the state information includes the system configuration information; and the determining unit is specifically configured to:
determine the transmission time sequence based on the system configuration information, where the transmission time sequence is related to a type of the system configuration.

Optionally, in another embodiment, the determining unit is further configured to:
determine a transmission time sequence of the network device based on capability information of a baseband processing unit.

For example, the network device may determine the transmission time sequence of the network device based on the capability information of the baseband processing unit of the network device.

Specifically, for example, the determining unit may be a scheduler module of the network device, and the scheduler module may determine the transmission time sequence of the network device based on a capability of the baseband processing unit.

After the terminal device and the network device both determine the corresponding transmission time sequences, the network device and the terminal device can perform communication based on the corresponding transmission time sequences.

Therefore, in this embodiment of the present invention, the network device can determine the transmission time sequence for the terminal device based on the state information of the communication with the terminal device, and the network device can flexibly determine the transmission time sequence of the terminal device based on different state information, to avoid a prior-art problem caused by a single transmission time sequence, and improve system performance.

It should be understood that, the network device 400 shown in FIG. 4 can implement the processes of the network device in the method embodiment in FIG. 3. Operations and/or functions of the modules in the network device 400 are respectively for implementing corresponding procedures in the method embodiment in FIG. 3. For details, refer to the descriptions in the foregoing method embodiment. To avoid repetition, detailed descriptions are properly omitted herein.

FIG. 5 is a schematic block diagram of a terminal device 500 according to an embodiment of the present invention. Specifically, as shown in FIG. 5, the terminal device 500 includes:
an obtaining unit 510, configured to obtain indication information sent by a network device and used to indicate a transmission time sequence of the terminal device, where the transmission time sequence is determined by the network device based on state information of current communication with the terminal device, and the transmission time sequence of the terminal device indicates duration from a time point at which the terminal device receives data to a time point at which the terminal device sends a response to the data; and
a determining unit 520, configured to determine the transmission time sequence based on the indication information.

Therefore, in this embodiment of the present invention, the terminal device can obtain the transmission time sequence of the terminal device that can be flexibly determined by the network device based on different state information, to avoid a prior-art problem caused by a single transmission time sequence, and improve system performance.

Optionally, in another embodiment, the state information includes transmission service type information, data amount information of a current transmission service, load information of the network device, state information of the terminal device, or system configuration information.

Optionally, in another embodiment, the state information includes the transmission service type information; and
when the service type information is first service type information, the transmission time sequence is a first transmission time sequence; or
when the service type information is second service type information, the transmission time sequence is a second transmission time sequence, where
a transmission delay of the first service type is shorter than a preset time threshold, a transmission delay of the second service type is higher than the preset time threshold, and duration of the first transmission time sequence is shorter than duration of the second transmission time sequence.

Alternatively, in another embodiment, the state information includes the data amount information of the current transmission service; and
when a data amount of the current transmission service is less than a preset data amount threshold, the transmission time sequence is a first transmission time sequence; or
when a data amount of the current transmission service is greater than the preset data amount threshold, the transmission time sequence is a second transmission time sequence, where duration of the first transmission time sequence is shorter than duration of the second transmission time sequence.

Alternatively, in another embodiment, the state information includes the load information of the network device; and
when load of the network device is lower than a preset load threshold, the transmission time sequence is a first transmission time sequence; or
when load of the network device is higher than a preset load threshold, the transmission time sequence is a second transmission time sequence, where
duration of the first transmission time sequence is shorter than duration of the second transmission time sequence.

Alternatively, in another embodiment, the state information includes the state information of the terminal device, and the state information of the terminal device includes information about a protocol version supported by the terminal device, channel quality information of the terminal device, a moving speed of the terminal device, or information about remaining transmit power of the terminal device; and
when the state information of the terminal device is first-type state information, the transmission time sequence is a first transmission time sequence; or
when the state information of the terminal device is second-type state information, the transmission time sequence is a second transmission time sequence, where
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to the preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and
duration of the first transmission time sequence is shorter than duration of the second transmission time sequence.

Further, in another embodiment, the terminal device further includes:
a sending unit, configured to: before the obtaining unit obtains the indication information sent by the network device and used to indicate the transmission time sequence of the terminal device, send the state information of the terminal device to the network device.

Alternatively, in another embodiment, the state information includes the system configuration information; and the transmission time sequence is related to a type of the system configuration.

Therefore, in this embodiment of the present invention, the terminal device can obtain the transmission time sequence of the terminal device that can be flexibly determined by the network device based on different state information, to avoid a prior-art problem caused by a single transmission time sequence, and improve system performance.

It should be understood that, the terminal device 500 shown in FIG. 5 can implement the processes of the terminal device in the method embodiment in FIG. 3. Operations and/or functions of the modules in the terminal device 500 are respectively for implementing corresponding procedures in the method embodiment in FIG. 3. For details, refer to the descriptions in the foregoing method embodiment. To avoid repetition, detailed descriptions are properly omitted herein.

FIG. 6 is a schematic block diagram of a network device 600 according to an embodiment of the present invention. Specifically, as shown in FIG. 6, the network device 600 includes a processor 610 and a transceiver 620. The processor 610 is connected to the transceiver 620. Optionally, the network device 600 further includes a memory 630. The memory 630 is connected to the processor 610. The processor 610, the memory 630, and the transceiver 620 communicate with each other to transfer a control and/or data signal along internal connection paths. The memory 630 may be configured to store an instruction. The processor 610 is configured to execute the instruction stored in the memory 630, to control the transceiver 620 to receive and send information or a signal.

Specifically, the processor 610 is configured to obtain state information of current communication with the terminal device; and determine a transmission time sequence of the terminal device based on the state information, where the transmission time sequence of the terminal device indicates duration from a time point at which the terminal device receives data to a time point at which the terminal device sends a response to the data. The transceiver 620 is configured to send, to the terminal device, indication information used to indicate the transmission time sequence.

Therefore, in this embodiment of the present invention, the network device can determine the transmission time sequence for the terminal device based on the state information of the communication with the terminal device, and the network device can flexibly determine the transmission time sequence of the terminal device based on different state information, to avoid a prior-art problem caused by a single transmission time sequence, and improve system performance.

It should be understood that in this embodiment of the present invention, the processor 610 may be a central processing unit (Central Processing Unit, "CPU" for short), or the processor 610 may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

The memory 630 may include a read-only memory and a random access memory, and provide an instruction and data to the processor 610. A part of the memory 630 may further include a non-volatile random access memory. For example, the memory 630 may further store information of a device type.

In an implementation process, steps in the foregoing method can be accomplished by using a hardware integrated logical circuit in the processor 610, or by using instructions in a form of software. The steps in the method disclosed with reference to the embodiments of the present invention may be directly performed by a hardware processor, or may be performed by using a combination of hardware and a software module in the processor. The software module may be located in a mature storage medium in the art, such as a random access memory, a flash memory, a read-only memory, a programmable read-only memory, an electrically erasable programmable memory, a register, or the like. The storage medium is located in the memory 630, and the processor 610 reads information in the memory 630 and completes the steps in the foregoing method in combination with hardware of the processor 610. To avoid repetition, details are not described herein again.

Optionally, in another embodiment, the state information includes transmission service type information, data amount information of a current transmission service, load information of the network device, state information of the terminal device, or system configuration information.

Optionally, in another embodiment, the state information includes the transmission service type information; and the processor 610 is specifically configured to:
when the service type information is first service type information, determine that the transmission time sequence is a first transmission time sequence; or
when the service type information is second service type information, determine that the transmission time sequence is a second transmission time sequence, where
a transmission delay of the first service type is shorter than a preset time threshold, a transmission delay of the second service type is higher than the preset time threshold, and duration of the first transmission time sequence is shorter than duration of the second transmission time sequence.

Alternatively, in another embodiment, the state information includes the data amount information of the current transmission service; and the processor 610 is specifically configured to:
when a data amount of the current transmission service is less than a preset data amount threshold, determine that the transmission time sequence is a first transmission time sequence; or
when a data amount of the current transmission service is greater than the preset data amount threshold, determine that the transmission time sequence is a second transmission time sequence, where duration of the first transmission time sequence is shorter than duration of the second transmission time sequence.

Alternatively, in another embodiment, the state information includes the load information of the network device; and the processor 610 is specifically configured to:
when load of the network device is lower than a preset load threshold, determine that the transmission time sequence is a first transmission time sequence; or
when load of the network device is higher than a preset load threshold, determine that the transmission time sequence is a second transmission time sequence, where
duration of the first transmission time sequence is shorter than duration of the second transmission time sequence.

Alternatively, in another embodiment, the state information includes the state information of the terminal device, and the state information of the terminal device includes information about a protocol version supported by the terminal device, channel quality information of the terminal device, a moving speed of the terminal device, or information about remaining transmit power of the terminal device; and the processor 610 is specifically configured to:
when the state information of the terminal device is first-type state information, determine that the transmission time sequence is a first transmission time sequence; or
when the state information of the terminal device is second-type state information, determine that the transmission time sequence is a second transmission time sequence, where
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to the preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and duration of the first transmission time sequence is shorter than duration of the second transmission time sequence.

Alternatively, in another embodiment, the state information includes the system configuration information; and the processor 610 is specifically configured to:
determine the transmission time sequence based on the system configuration information, where the transmission time sequence is related to a type of the system configuration.

Optionally, in another embodiment, the processor 610 is further configured to:
determine a transmission time sequence of the network device based on capability information of a baseband processing unit.

For example, the network device may determine the transmission time sequence of the network device based on the capability information of the baseband processing unit of the network device.

Specifically, for example, the determining unit may be a scheduler module of the network device, and the scheduler module may determine the transmission time sequence of the network device based on a capability of the baseband processing unit.

After the terminal device and the network device both determine the corresponding transmission time sequences, the network device and the terminal device can perform communication based on the corresponding transmission time sequences.

Therefore, in this embodiment of the present invention, the network device can determine the transmission time sequence for the terminal device based on the state information of the communication with the terminal device, and the network device can flexibly determine the transmission time sequence of the terminal device based on different state information, to avoid a prior-art problem caused by a single transmission time sequence, and improve system performance.

It should be understood that, the network device 600 shown in FIG. 6 can implement the processes of the network device in the method embodiment in FIG. 3. Operations and/or functions of the modules in the network device 600 are respectively for implementing corresponding procedures in the method embodiment in FIG. 3. For details, refer to the descriptions in the foregoing method embodiment. To avoid repetition, detailed descriptions are properly omitted herein.

FIG. 7 is a schematic block diagram of a terminal device 700 according to an embodiment of the present invention. Specifically, as shown in FIG. 7, the terminal device 700 includes a processor 710 and a transceiver 720. The processor 710 is connected to the transceiver 720. Optionally, the network device 700 further includes a memory 730. The memory 730 is connected to the processor 710. The processor 710, the memory 730, and the transceiver 720 communicate with each other to transfer a control and/or data signal along internal connection paths. The memory 730 may be configured to store an instruction. The processor 710 is configured to execute the instruction stored in the memory 730, to control the transceiver 720 to receive and send information or a signal.

Specifically, the transceiver 720 is configured to obtain indication information sent by a network device and used to indicate a transmission time sequence of the terminal device, where the transmission time sequence is determined by the network device based on state information of current communication with the terminal device, and the transmission time sequence of the terminal device indicates duration from a time point at which the terminal device receives data to a time point at which the terminal device sends a response to the data. The processor 710 is configured to determine the transmission time sequence based on the indication information.

Therefore, in this embodiment of the present invention, the terminal device can obtain the transmission time sequence of the terminal device that can be flexibly determined by the network device based on different state information, to avoid a prior-art problem caused by a single transmission time sequence, and improve system performance.

It should be understood that in this embodiment of the present invention, the processor 710 may be a central processing unit (Central Processing Unit, "CPU" for short), or the processor 710 may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

The memory 730 may include a read-only memory and a random access memory, and provide an instruction and data to the processor 710. A part of the memory 730 may further include a non-volatile random access memory. For example, the memory 730 may further store information of a device type.

In an implementation process, steps in the foregoing method can be accomplished by using a hardware integrated logical circuit in the processor 710, or by using instructions in a form of software. The steps in the method disclosed with reference to the embodiments of the present invention may be directly performed by a hardware processor, or may be performed by using a combination of hardware and a software module in the processor. The software module may be located in a mature storage medium in the art, such as a random access memory, a flash memory, a read-only memory, a programmable read-only memory, an electrically erasable programmable memory, a register, or the like. The storage medium is located in the memory 730, and a processor 710 reads information in the memory 730 and completes the steps in the foregoing method in combination with hardware of the processor 710. To avoid repetition, details are not described herein again.

Optionally, in another embodiment, the state information includes transmission service type information, data amount information of a current transmission service, load information of the network device, state information of the terminal device, or system configuration information.

Optionally, in another embodiment, the state information includes the transmission service type information; and
when the service type information is first service type information, the transmission time sequence is a first transmission time sequence; or
when the service type information is second service type information, the transmission time sequence is a second transmission time sequence, where
a transmission delay of the first service type is shorter than a preset time threshold, a transmission delay of the second service type is higher than the preset time threshold, and duration of the first transmission time sequence is shorter than duration of the second transmission time sequence.

Alternatively, in another embodiment, the state information includes the data amount information of the current transmission service; and
when a data amount of the current transmission service is less than a preset data amount threshold, the transmission time sequence is a first transmission time sequence; or
when a data amount of the current transmission service is greater than the preset data amount threshold, the transmission time sequence is a second transmission time sequence, where duration of the first transmission time sequence is shorter than duration of the second transmission time sequence.

Alternatively, in another embodiment, the state information includes the load information of the network device; and
when load of the network device is lower than a preset load threshold, the transmission time sequence is a first transmission time sequence; or
when load of the network device is higher than a preset load threshold, the transmission time sequence is a second transmission time sequence, where
duration of the first transmission time sequence is shorter than duration of the second transmission time sequence.

Alternatively, in another embodiment, the state information includes the state information of the terminal device, and the state information of the terminal device includes information about a protocol version supported by the terminal device, channel quality information of the terminal device, a moving speed of the terminal device, or information about remaining transmit power of the terminal device; and
when the state information of the terminal device is first-type state information, the transmission time sequence is a first transmission time sequence; or
when the state information of the terminal device is second-type state information, the transmission time sequence is a second transmission time sequence, where
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to the preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and
duration of the first transmission time sequence is shorter than duration of the second transmission time sequence.

Further, in another embodiment, the transceiver 720 is further configured to: before the obtaining unit obtains the indication information sent by the network device and used to indicate the transmission time sequence of the terminal device, send the state information of the terminal device to the network device.

Alternatively, in another embodiment, the state information includes the system configuration information; and the transmission time sequence is related to a type of the system configuration.

Therefore, in this embodiment of the present invention, the terminal device can obtain the transmission time sequence of the terminal device that can be flexibly determined by the network device based on different state information, to avoid a prior-art problem caused by a single transmission time sequence, and improve system performance.

It should be understood that, the terminal device 700 shown in FIG. 7 can implement the processes of the terminal device in the method embodiment in FIG. 3. Operations and/or functions of the modules in the terminal device 700 are respectively for implementing corresponding procedures in the method embodiment in FIG. 3. For details, refer to the descriptions in the foregoing method embodiment. To avoid repetition, detailed descriptions are properly omitted herein.

It should be understood that "one embodiment" or "an embodiment" mentioned in the whole specification does not mean that particular features, structures, or characteristics related to the embodiment are included in at least one embodiment of the present invention. Therefore, "in one embodiment" or "in an embodiment" appearing throughout the specification does not refer to a same embodiment. In addition, these particular features, structures, or characteristics may be combined in one or more embodiments in any appropriate manner. It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining B according to A does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be stored in a computer readable medium or transmitted as one or more instructions or code in the computer readable medium. The computer readable medium includes a computer storage medium and a communications medium, where the communications medium includes any medium that enables a computer program to be transmitted from one place to another. The storage medium may be any available medium accessible to a computer. The following provides an example but does not impose a limitation: The computer readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data in a magnetic manner, and the disc copies data optically in a laser manner. The foregoing combination should also be included in the protection scope of the computer readable medium.

In conclusion, what is described above is merely examples of embodiments of the technical solutions of the embodiments of the present invention, but is not intended to limit the protection scope of the present invention. Any modification, equivalent replacement, or improvement made without departing from the principle of the embodiments of the present invention shall fall within the protection scope of the embodiments of the present invention.

## Claims

1. A communication method, comprising:
obtaining (310), by a network device, state information of current communication with a terminal device;
**characterized by**
determining (320), by the network device, a transmission time sequence of the terminal device based on the state information, wherein the transmission time sequence of the terminal device indicates duration from a time point at which the terminal device receives data to a time point at which the terminal device sends a response to the data; and
sending (330), by the network device to the terminal device, indication information used to indicate the transmission time sequence.

2. The communication method according to claim 1, wherein
the state information comprises: transmission service type information, data amount information of a current transmission service, load information of the network device, state information of the terminal device, or system configuration information.

3. The communication method according to claim 1 or 2, wherein
the state information comprises the transmission service type information; and
the determining (320), by the network device, a transmission time sequence of the terminal device based on the state information comprises:
when the service type information is information of a first service type, determining that the transmission time sequence is a first transmission time sequence; or
when the service type information is information of a second service type, determining that the transmission time sequence is a second transmission time sequence, wherein
a transmission delay of a first service type is shorter than a preset time threshold, a transmission delay of a second service type is higher than the preset time threshold, and duration of the first transmission time sequence is shorter than duration of the second transmission time sequence.

4. The communication method according to claim 1 or 2, wherein
the state information comprises the data amount information of the current transmission service; and
the determining (320), by the network device based on the state information, a transmission time sequence of the terminal device that corresponds to the state information comprises:
when a data amount of the current transmission service is less than a preset data amount threshold, determining that the transmission time sequence is a first transmission time sequence; or
when a data amount of the current transmission service is greater than a preset data amount threshold, determining that the transmission time sequence is a second transmission time sequence, wherein duration of the first transmission time sequence is shorter than duration of the second transmission time sequence.

5. The communication method according to claim 1 or 2, wherein
the state information comprises the load information of the network device; and
the determining (320), by the network device based on the state information, a transmission time sequence of the terminal device that corresponds to the state information comprises:
when load of the network device is lower than a preset load threshold, determining that the transmission time sequence is a first transmission time sequence; or
when load of the network device is higher than a preset load threshold, determining that the transmission time sequence is a second transmission time sequence, wherein
duration of the first transmission time sequence is shorter than duration of the second transmission time sequence.

6. The communication method according to claim 1 or 2, wherein
the state information comprises the state information of the terminal device, and the state information of the terminal device comprises information about a protocol version supported by the terminal device, channel quality information of the terminal device, a moving speed of the terminal device, or information about remaining transmit power of the terminal device; and
the determining (320), by the network device based on the state information, a transmission time sequence of the terminal device that corresponds to the state information comprises:
when the state information of the terminal device is first-type state information, determining that the transmission time sequence is a first transmission time sequence; or
when the state information of the terminal device is second-type state information, determining that the transmission time sequence is a second transmission time sequence, wherein
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to a preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and
duration of the first transmission time sequence is shorter than duration of the second transmission time sequence.

7. The communication method according to claim 1 or 2, wherein
the state information comprises the system configuration information; and
the determining (320), by the network device based on the state information, a transmission time sequence of the terminal device that corresponds to the state information comprises:
determining the transmission time sequence based on the system configuration information, wherein the transmission time sequence is related to a type of system configuration.

8. A network device (400), comprising:
an obtaining unit (410), configured to obtain state information of current communication with a terminal device;
**characterized by**
a determining unit (420), configured to determine a transmission time sequence of the terminal device based on the state information, wherein the transmission time sequence of the terminal device indicates duration from a time point at which the terminal device receives data to a time point at which the terminal device sends a response to the data; and
a sending unit (430), configured to send, to the terminal device, indication information used to indicate the transmission time sequence.

9. The network device (400) according to claim 8, wherein
the state information comprises transmission service type information, data amount information of a current transmission service, load information of the network device, state information of the terminal device, or system configuration information.

10. The network device (400) according to claim 8 or 9, wherein
the state information comprises the transmission service type information; and
the determining unit (420) is specifically configured to:
when the service type information is information of a first service type, determine that the transmission time sequence is a first transmission time sequence; or
when the service type information is information of a second service type, determine that the transmission time sequence is a second transmission time sequence, wherein
a transmission delay of the first service type is shorter than a preset time threshold, a transmission delay of the second service type is higher than the preset time threshold, and duration of the first transmission time sequence is shorter than duration of the second transmission time sequence.

11. The network device (400) according to claim 8 or 9, wherein
the state information comprises the data amount information of the current transmission service; and
the determining unit (420) is specifically configured to:
when a data amount of the current transmission service is less than a preset data amount threshold, determine that the transmission time sequence is a first transmission time sequence; or
when a data amount of the current transmission service is greater than the preset data amount threshold, determine that the transmission time sequence is a second transmission time sequence, wherein duration of the first transmission time sequence is shorter than duration of the second transmission time sequence.

12. The network device (400) according to claim 8 or 9, wherein
the state information comprises the load information of the network device; and
the determining unit (420) is specifically configured to:
when load of the network device is lower than a preset load threshold, determine that the transmission time sequence is a first transmission time sequence; or
when load of the network device is higher than a preset load threshold, determine that the transmission time sequence is a second transmission time sequence, wherein
duration of the first transmission time sequence is shorter than duration of the second transmission time sequence.

13. The network device (400) according to claim 8 or 9, wherein
the state information comprises the state information of the terminal device, and the state information of the terminal device comprises information about a protocol version supported by the terminal device, channel quality information of the terminal device, a moving speed of the terminal device, or information about remaining transmit power of the terminal device; and
the determining unit (420) is specifically configured to:
when the state information of the terminal device is first-type state information, determine that the transmission time sequence is a first transmission time sequence; or
when the state information of the terminal device is second-type state information, determine that the transmission time sequence is a second transmission time sequence, wherein
when the protocol version supported by the terminal device is lower than a preset protocol version, channel quality of the terminal device is lower than a quality threshold, the moving speed of the terminal device is greater than a preset speed threshold, or the remaining transmit power of the terminal device is lower than a power threshold, the state information of the terminal device is the first-type state information; or when the protocol version supported by the terminal device is higher than or equal to the preset protocol version, channel quality of the terminal device is higher than a quality threshold, the moving speed of the terminal device is less than a preset speed threshold, or the remaining transmit power of the terminal device is higher than a power threshold, the state information of the terminal device is the second-type state information; and
duration of the first transmission time sequence is shorter than duration of the second transmission time sequence.

14. The network device (400) according to claim 8 or 9, wherein
the state information comprises the system configuration information; and
the determining unit (420) is specifically configured to:
determine the transmission time sequence based on the system configuration information, wherein the transmission time sequence is related to a type of the system configuration.

15. A program product which makes a computer to execute method of any of claims 1 to 7.

## Patentansprüche

1. Kommunikationsverfahren, umfassend:
Erhalten (310) von Zustandsinformationen aktueller Kommunikation mit einer Endgerätevorrichtung, durch eine Netzvorrichtung;
**gekennzeichnet durch**
Bestimmen (320) einer Übertragungszeitsequenz der Endgerätevorrichtung durch die Netzvorrichtung auf der Basis der Zustandsinformationen, wobei die Übertragungszeitsequenz der Endgerätevorrichtung Dauer von einem Zeitpunkt, zu dem die Endgerätevorrichtung Daten empfängt, bis zu einem Zeitpunkt, zu dem die Endgerätevorrichtung eine Antwort auf die Daten sendet, angibt; und
Senden (330) von zur Angabe der Übertragungszeitsequenz verwendeten Angabeinformationen zu der Endgerätevorrichtung durch die Netzvorrichtung.

2. Kommunikationsverfahren nach Anspruch 1, wobei
die Zustandsinformationen Folgendes umfassen: Übertragungsdiensttypinformationen, Datenmengeninformationen eines aktuellen Übertragungsdienstes, Lastinformationen der Netzvorrichtung, Zustandsinformationen der Endgerätevorrichtung oder Systemkonfigurationsinformationen.

3. Kommunikationsvorrichtung nach Anspruch 1 oder 2, wobei die Zustandsinformationen die Übertragungsdiensttypinformationen umfassen; und das Bestimmen (320) einer Übertragungszeitsequenz der Endgerätevorrichtung durch die Netzvorrichtung auf der Basis der Zustandsinformationen Folgendes umfasst:
wenn die Diensttypinformationen Informationen eines ersten Diensttyps sind, Bestimmen, dass die Übertragungszeitsequenz eine erste Übertragungszeitsequenz ist; oder,
wenn die Diensttypinformationen Informationen eines zweiten Diensttyps sind, Bestimmen, dass die Übertragungszeitsequenz eine zweite Übertragungszeitsequenz ist, wobei
eine Übertragungsverzögerung eines ersten Diensttyps kürzer als eine voreingestellte Zeitschwelle ist, eine Übertragungsverzögerung eines zweiten Diensttyps höher als die voreingestellte Zeitschwelle ist und Dauer der ersten Übertragungszeitsequenz kürzer als Dauer der zweiten Übertragungszeitsequenz ist.

4. Kommunikationsverfahren nach Anspruch 1 oder 2, wobei
die Zustandsinformationen die Datenmengeninformationen des aktuellen Übertragungsdienstes umfassen; und
das Bestimmen (320) einer Übertragungszeitsequenz der Endgerätevorrichtung, die den Zustandsinformationen entspricht, durch die Netzvorrichtung auf der Basis der Zustandsinformationen Folgendes umfasst:
wenn eine Datenmenge des aktuellen Übertragungsdienstes kleiner als eine voreingestellte Datenmengenschwelle ist, Bestimmen, dass die Übertragungszeitsequenz eine erste Übertragungszeitsequenz ist; oder,
wenn eine Datenmenge des aktuellen Übertragungsdienstes größer als eine voreingestellte Datenmengenschwelle ist, Bestimmen, dass die Übertragungszeitsequenz eine zweite Übertragungszeitsequenz ist, wobei Dauer der ersten Übertragungszeitsequenz kürzer als Dauer der zweiten Übertragungszeitsequenz ist.

5. Kommunikationsverfahren nach Anspruch 1 oder 2, wobei die Zustandsinformationen die Lastinformationen der Netzvorrichtung umfassen; und das Bestimmen (320) einer Übertragungszeitsequenz der Endgerätevorrichtung, die den Zustandsinformationen entspricht, durch die Netzvorrichtung auf der Basis der Zustandsinformationen Folgendes umfasst:
wenn Last der Netzvorrichtung niedriger als eine voreingestellte Lastschwelle ist, Bestimmen, dass die Übertragungszeitsequenz eine erste Übertragungszeitsequenz ist; oder,
wenn Last der Netzvorrichtung höher als eine voreingestellte Lastschwelle ist, Bestimmen, dass die Übertragungszeitsequenz eine zweite Übertragungszeitsequenz ist, wobei
Dauer der ersten Übertragungszeitsequenz kürzer als Dauer der zweiten Übertragungszeitsequenz ist.

6. Kommunikationsverfahren nach Anspruch 1 oder 2, wobei die Zustandsinformationen die Zustandsinformationen der Endgerätevorrichtung umfassen und die Zustandsinformationen der Endgerätevorrichtung Informationen über eine durch die Endgerätevorrichtung unterstützte Protokollversion, Kanalqualitätsinformationen der Endgerätevorrichtung und eine Bewegungsgeschwindigkeit der Endgerätevorrichtung oder Informationen über verbleibende Sendeleistung der Endgerätevorrichtung umfassen; und
das Bestimmen (320) einer Übertragungszeitsequenz der Endgerätevorrichtung, die den Zustandsinformationen entspricht, durch die Netzvorrichtung auf der Basis der Zustandsinformationen Folgendes umfasst:
wenn die Zustandsinformationen der Endgerätevorrichtung Zustandsinformationen ersten Typs sind, Bestimmen, dass die Übertragungszeitsequenz eine erste Übertragungszeitsequenz ist; oder,
wenn die Zustandsinformationen der Endgerätevorrichtung Zustandsinformationen zweiten Typs sind, Bestimmen, dass die Übertragungszeitsequenz eine zweite Übertragungszeitsequenz ist, wobei,
wenn die durch die Endgerätevorrichtung unterstützte Protokollversion niedriger als eine voreingestellte Protokollversion ist, Kanalqualität der Endgerätevorrichtung niedriger als eine Qualitätsschwelle ist, die Bewegungsgeschwindigkeit der Endgerätevorrichtung größer als eine voreingestellte Geschwindigkeitsschwelle ist oder die verbleibende Sendeleistung der Endgerätevorrichtung niedriger als eine Leistungsschwelle ist, die Zustandsinformationen der Endgerätevorrichtung Zustandsinformationen ersten Typs sind; oder, wenn die durch die Endgerätevorrichtung unterstützte Protokollversion höher als eine oder gleich einer voreingestellten Protokollversion ist, Kanalqualität der Endgerätevorrichtung höher als eine Qualitätsschwelle ist, die Bewegungsgeschwindigkeit der Endgerätevorrichtung kleiner als eine voreingestellte Geschwindigkeitsschwelle ist oder die verbleibende Sendeleistung der Endgerätevorrichtung höher als eine Leistungsschwelle ist, die Zustandsinformationen der Endgerätevorrichtung Zustandsinformationen zweiten Typs sind; und
Dauer der ersten Übertragungszeitsequenz kürzer als Dauer der zweiten Übertragungszeitsequenz ist.

7. Kommunikationsverfahren nach Anspruch 1 oder 2, wobei die Zustandsinformationen die Systemkonfigurationsinformationen umfassen; und das Bestimmen (320) einer Übertragungszeitsequenz der Endgerätevorrichtung, die den Zustandsinformationen entspricht, durch die Netzvorrichtung auf der Basis der Zustandsinformationen Folgendes umfasst:
Bestimmen der Übertragungszeitsequenz auf der Basis der Systemkonfigurationsinformationen, wobei die Übertragungszeitsequenz mit einem Typ von Systemkonfiguration in Beziehung steht.

8. Netzvorrichtung (400), umfassend:
eine Erhalteeinheit (410), ausgelegt zum Erhalten von Zustandsinformationen aktueller Kommunikation mit einer Endgerätevorrichtung;
**gekennzeichnet durch**
eine Bestimmungseinheit (420), ausgelegt zum Bestimmen einer Übertragungszeitsequenz der Endgerätevorrichtung auf der Basis der Zustandsinformationen, wobei die Übertragungszeitsequenz der Endgerätevorrichtung Dauer von einem Zeitpunkt, zu dem die Endgerätevorrichtung Daten empfängt, bis zu einem Zeitpunkt, zu dem die Endgerätevorrichtung eine Antwort auf die Daten sendet, angibt; und
eine Sendeeinheit (430), ausgelegt zum Senden von zur Angabe der Übertragungszeitsequenz verwendeten Angabeinformationen zu der Endgerätevorrichtung.

9. Netzvorrichtung (400) nach Anspruch 8, wobei
die Zustandsinformationen Folgendes umfassen: Übertragungsdiensttypinformationen, Datenmengeninformationen eines aktuellen Übertragungsdienstes, Lastinformationen der Netzvorrichtung, Zustandsinformationen der Endgerätevorrichtung oder Systemkonfigurationsinformationen.

10. Netzvorrichtung (400) nach Anspruch 8 oder 9, wobei die Zustandsinformationen die Übertragungsdiensttypinformationen umfassen; und die Bestimmungseinheit (420) spezifisch ausgelegt ist zum:
wenn die Diensttypinformationen Informationen eines ersten Diensttyps sind, Bestimmen, dass die Übertragungszeitsequenz eine erste Übertragungszeitsequenz ist; oder,
wenn die Diensttypinformationen Informationen eines zweiten Diensttyps sind, Bestimmen, dass die Übertragungszeitsequenz eine zweite Übertragungszeitsequenz ist, wobei
eine Übertragungsverzögerung eines ersten Diensttyps kürzer als eine voreingestellte Zeitschwelle ist, eine Übertragungsverzögerung eines zweiten Diensttyps höher als die voreingestellte Zeitschwelle ist und Dauer der ersten Übertragungszeitsequenz kürzer als Dauer der zweiten Übertragungszeitsequenz ist.

11. Netzvorrichtung (400) nach einem der Ansprüche 8 oder 9, wobei die Zustandsinformationen die Datenmengeninformationen des aktuellen Übertragungsdienstes umfassen; und
die Bestimmungseinheit (420) spezifisch ausgelegt ist zum:
wenn eine Datenmenge des aktuellen Übertragungsdienstes kleiner als eine voreingestellte Datenmengenschwelle ist, Bestimmen, dass die Übertragungszeitsequenz eine erste Übertragungszeitsequenz ist; oder,
wenn eine Datenmenge des aktuellen Übertragungsdienstes größer als die voreingestellte Datenmengenschwelle ist, Bestimmen, dass die Übertragungszeitsequenz eine zweite Übertragungszeitsequenz ist, wobei Dauer der ersten Übertragungszeitsequenz kürzer als Dauer der zweiten Übertragungszeitsequenz ist.

12. Netzvorrichtung (400) nach Anspruch 8 oder 9, wobei die Zustandsinformationen die Lastinformationen der Netzvorrichtung umfassen; und die Bestimmungseinheit (420) spezifisch ausgelegt ist zum:
wenn Last der Netzvorrichtung niedriger als eine voreingestellte Lastschwelle ist, Bestimmen, dass die Übertragungszeitsequenz eine erste Übertragungszeitsequenz ist; oder,
wenn Last der Netzvorrichtung höher als eine voreingestellte Lastschwelle ist, Bestimmen, dass die Übertragungszeitsequenz eine zweite Übertragungszeitsequenz ist, wobei
Dauer der ersten Übertragungszeitsequenz kürzer als Dauer der zweiten Übertragungszeitsequenz ist.

13. Netzvorrichtung (400) nach Anspruch 8 oder 9, wobei die Zustandsinformationen die Zustandsinformationen der Endgerätevorrichtung umfassen und die Zustandsinformationen der Endgerätevorrichtung Informationen über eine durch die Endgerätevorrichtung unterstützte Protokollversion, Kanalqualitätsinformationen der Endgerätevorrichtung, eine Bewegungsgeschwindigkeit der Endgerätevorrichtung oder Informationen über verbleibende Sendeleistung der Endgerätevorrichtung umfassen; und
die Bestimmungseinheit (420) spezifisch ausgelegt ist zum:
wenn die Zustandsinformationen der Endgerätevorrichtung Zustandsinformationen ersten Typs sind, Bestimmen, dass die Übertragungszeitsequenz eine erste Übertragungszeitsequenz ist; oder,
wenn die Zustandsinformationen der Endgerätevorrichtung Zustandsinformationen zweiten Typs sind, Bestimmen, dass die Übertragungszeitsequenz eine zweite Übertragungszeitsequenz ist, wobei,
wenn die durch die Endgerätevorrichtung unterstützte Protokollversion niedriger als eine voreingestellte Protokollversion ist, Kanalqualität der Endgerätevorrichtung niedriger als eine Qualitätsschwelle ist, die Bewegungsgeschwindigkeit der Endgerätevorrichtung größer als eine voreingestellte Geschwindigkeitsschwelle ist oder die verbleibende Sendeleistung der Endgerätevorrichtung niedriger als eine Leistungsschwelle ist, die Zustandsinformationen der Endgerätevorrichtung Zustandsinformationen ersten Typs sind; oder, wenn die durch die Endgerätevorrichtung unterstützte Protokollversion höher als eine oder gleich einer voreingestellten Protokollversion ist, Kanalqualität der Endgerätevorrichtung höher als eine Qualitätsschwelle ist, die Bewegungsgeschwindigkeit der Endgerätevorrichtung kleiner als eine voreingestellte Geschwindigkeitsschwelle ist oder die verbleibende Sendeleistung der Endgerätevorrichtung höher als eine Leistungsschwelle ist, die Zustandsinformationen der Endgerätevorrichtung Zustandsinformationen zweiten Typs sind; und
Dauer der ersten Übertragungszeitsequenz kürzer als Dauer der zweiten Übertragungszeitsequenz ist.

14. Netzvorrichtung (400) nach Anspruch 8 oder 9, wobei
die Zustandsinformationen die Systemkonfigurationsinformationen umfassen; und
die Bestimmungseinheit (420) spezifisch ausgelegt ist zum:
Bestimmen der Übertragungszeitsequenz auf der Basis der Systemkonfigurationsinformationen, wobei die Übertragungszeitsequenz mit einem Typ von Systemkonfiguration in Beziehung steht.

15. Programmprodukt, das bewirkt, dass ein Computer ein Verfahren nach einem der Ansprüche 1 bis 7 ausführt.

## Revendications

1. Procédé de communication, comprenant de :
obtenir (310), par un dispositif de réseau, une information d'état d'une communication en cours avec un dispositif terminal ;
**caractérisé par** les étapes consistant à :
déterminer (320), par le dispositif de réseau, une séquence de temps de transmission du dispositif terminal sur la base de l'information d'état, la séquence de temps de transmission du dispositif terminal indiquant une durée depuis un moment où le dispositif terminal reçoit des données jusqu'à un moment où le dispositif terminal envoie une réponse aux données ; et
envoyer (330), par le dispositif de réseau au dispositif terminal, une information d'indication utilisée pour indiquer la séquence de temps de transmission.

2. Procédé de communication selon la revendication 1, dans lequel :
l'information d'état comprend : une information de type de service de transmission,
une information de quantité de données d'un service de transmission en cours, une information de charge du dispositif de réseau, une information d'état du dispositif terminal ou une information de configuration de système.

3. Procédé de communication selon la revendication 1 ou 2, dans lequel :
l'information d'état comprend l'information de type de service de transmission ; et
la détermination (320), par le dispositif de réseau, d'une séquence de temps de transmission du dispositif terminal sur la base de l'information d'état comprend l'étape consistant à :
quand l'information de type de service est une information d'un premier type de service, déterminer que la séquence de temps de transmission est une première séquence de temps de transmission ; ou
quand l'information de type de service est une information d'un second type de service,
déterminer que la séquence de temps de transmission est une seconde séquence de temps de transmission,
un délai de transmission d'un premier type de service étant plus court qu'un seuil de temps prédéfini, un délai de transmission d'un second type de service étant plus long que le seuil de temps prédéfini, et une durée de la première séquence de temps de transmission étant plus courte qu'une durée de la seconde séquence de temps de transmission.

4. Procédé de communication selon la revendication 1 ou 2, dans lequel :
l'information d'état comprend l'information de quantité de données du service de transmission en cours ; et
la détermination (320), par le dispositif de réseau sur la base de l'information d'état,
d'une séquence de temps de transmission du dispositif terminal qui correspond à l'information d'état comprend l'étape consistant à :
quand une quantité de données du service de transmission en cours est inférieure à un seuil de quantité de données prédéfini, déterminer que la séquence de temps de transmission est une première séquence de temps de transmission ; ou
quand une quantité de données du service de transmission en cours est supérieure à un seuil de quantité de données prédéfini, déterminer que la séquence de temps de transmission est une seconde séquence de temps de transmission,
une durée de la première séquence de temps de transmission étant plus courte qu'une durée de la seconde séquence de temps de transmission.

5. Procédé de communication selon la revendication 1 ou 2, dans lequel :
l'information d'état comprend l'information de charge du dispositif de réseau ; et
la détermination (320), par le dispositif de réseau sur la base de l'information d'état,
d'une séquence de temps de transmission du dispositif terminal qui correspond à l'information d'état comprend l'étape consistant à :
quand une charge du dispositif de réseau est inférieure à un seuil de charge prédéfini,
déterminer que la séquence de temps de transmission est une première séquence de temps de transmission ; ou
quand une charge du dispositif de réseau est supérieure à un seuil de charge prédéfini,
déterminer que la séquence de temps de transmission est une seconde séquence de temps de transmission,
une durée de la première séquence de temps de transmission étant plus courte qu'une durée de la seconde séquence de temps de transmission.

6. Procédé de communication selon la revendication 1 ou 2, dans lequel :
l'information d'état comprend l'information d'état du dispositif terminal, et
l'information d'état du dispositif terminal comprend une information concernant une version de protocole prise en charge par le dispositif terminal, une information de qualité de canal du dispositif terminal, une vitesse de déplacement du dispositif terminal ou une information concernant une puissance de transmission restante du dispositif terminal ; et
la détermination (320), par le dispositif de réseau sur la base de l'information d'état,
d'une séquence de temps de transmission du dispositif terminal qui correspond à l'information d'état comprend l'étape consistant à :
quand l'information d'état du dispositif terminal est une information d'état d'un premier type, déterminer que la séquence de temps de transmission est une première séquence de temps de transmission ; ou
quand l'information d'état du dispositif terminal est une information d'état d'un second type, déterminer que la séquence de temps de transmission est une seconde séquence de temps de transmission,
quand la version de protocole prise en charge par le dispositif terminal est inférieure à une version de protocole prédéfinie, une qualité de canal du dispositif terminal est inférieure à un seuil de qualité, la vitesse de déplacement du dispositif terminal est supérieure à un seuil de vitesse prédéfini ou la puissance de transmission restante du dispositif terminal est inférieure à un seuil de puissance, l'information d'état du dispositif terminal étant l'information d'état du premier type ; ou quand la version de protocole prise en charge par le dispositif terminal est supérieure ou égale à une version de protocole prédéfinie, une qualité de canal du dispositif terminal est supérieure à un seuil de qualité, la vitesse de déplacement du dispositif terminal est inférieure à un seuil de vitesse prédéfini ou la puissance de transmission restante du dispositif terminal est supérieure à un seuil de puissance, l'information d'état du dispositif terminal étant l'information d'état du second type ; et
une durée de la première séquence de temps de transmission étant plus courte qu'une durée de la seconde séquence de temps de transmission.

7. Procédé de communication selon la revendication 1 ou 2, dans lequel :
l'information d'état comprend l'information de configuration de système ; et
la détermination (320), par le dispositif de réseau sur la base de l'information d'état,
d'une séquence de temps de transmission du dispositif terminal qui correspond à l'information d'état comprend de :
déterminer la séquence de temps de transmission sur la base de l'information de configuration de système, la séquence de temps de transmission étant liée à un type de configuration de système.

8. Dispositif de réseau (400), comprenant :
une unité d'obtention (410), configurée pour obtenir une information d'état d'une communication en cours avec un dispositif terminal ;
le dispositif de réseau étant **caractérisé par** :
une unité de détermination (420), configurée pour déterminer une séquence de temps de transmission du dispositif terminal sur la base de l'information d'état, la séquence de temps de transmission du dispositif terminal indiquant une durée depuis un moment où le dispositif terminal reçoit des données jusqu'à un moment où le dispositif terminal envoie une réponse aux données ; et
une unité d'envoi (430), configurée pour envoyer, au dispositif terminal, une information d'indication utilisée pour indiquer la séquence de temps de transmission.

9. Dispositif de réseau (400) selon la revendication 8, dans lequel :
l'information d'état comprend une information de type de service de transmission, une information de quantité de données d'un service de transmission en cours, une information de charge du dispositif de réseau, une information d'état du dispositif terminal ou une information de configuration de système.

10. Dispositif de réseau (400) selon la revendication 8 ou 9, dans lequel :
l'information d'état comprend l'information de type de service de transmission ; et
l'unité de détermination (420) est spécifiquement configurée pour :
quand l'information de type de service est une information d'un premier type de service, déterminer que la séquence de temps de transmission est une première séquence de temps de transmission ; ou
quand l'information de type de service est une information d'un second type de service, déterminer que la séquence de temps de transmission est une seconde séquence de temps de transmission,
un délai de transmission du premier type de service étant plus court qu'un seuil de temps prédéfini, un délai de transmission du second type de service étant plus long que le seuil de temps prédéfini, et une durée de la première séquence de temps de transmission étant plus courte qu'une durée de la seconde séquence de temps de transmission.

11. Dispositif de réseau (400) selon la revendication 8 ou 9, dans lequel :
l'information d'état comprend l'information de quantité de données du service de transmission en cours ; et
l'unité de détermination (420) est spécifiquement configurée pour :
quand une quantité de données du service de transmission en cours est inférieure à un seuil de quantité de données prédéfini, déterminer que la séquence de temps de transmission est une première séquence de temps de transmission ; ou
quand une quantité de données du service de transmission en cours est supérieure au seuil de quantité de données prédéfini, déterminer que la séquence de temps de transmission est une seconde séquence de temps de transmission,
une durée de la première séquence de temps de transmission étant plus courte qu'une durée de la seconde séquence de temps de transmission.

12. Dispositif de réseau (400) selon la revendication 8 ou 9, dans lequel :
l'information d'état comprend l'information de charge du dispositif de réseau ; et
l'unité de détermination (420) est spécifiquement configurée pour :
quand une charge du dispositif de réseau est inférieure à un seuil de charge prédéfini,
déterminer que la séquence de temps de transmission est une première séquence de temps de transmission ; ou
quand une charge du dispositif de réseau est supérieure à un seuil de charge prédéfini,
déterminer que la séquence de temps de transmission est une seconde séquence de temps de transmission,
une durée de la première séquence de temps de transmission étant plus courte qu'une durée de la seconde séquence de temps de transmission.

13. Dispositif de réseau (400) selon la revendication 8 ou 9, dans lequel :
l'information d'état comprend l'information d'état du dispositif terminal, et
l'information d'état du dispositif terminal comprend une information concernant une version de protocole prise en charge par le dispositif terminal, une information de qualité de canal du dispositif terminal, une vitesse de déplacement du dispositif terminal ou une information concernant une puissance de transmission restante du dispositif terminal ; et
l'unité de détermination (420) est spécifiquement configurée pour :
quand l'information d'état du dispositif terminal est une information d'état d'un premier type, déterminer que la séquence de temps de transmission est une première séquence de temps de transmission ; ou
quand l'information d'état du dispositif terminal est une information d'état d'un second type, déterminer que la séquence de temps de transmission est une seconde séquence de temps de transmission,
quand la version de protocole prise en charge par le dispositif terminal est inférieure à une version de protocole prédéfinie, une qualité de canal du dispositif terminal est inférieure à un seuil de qualité, la vitesse de déplacement du dispositif terminal est supérieure à un seuil de vitesse prédéfini, ou la puissance de transmission restante du dispositif terminal est inférieure à un seuil de puissance, l'information d'état du dispositif terminal étant l'information d'état du premier type ; ou quand la version de protocole prise en charge par le dispositif terminal est supérieure ou égale à la version de protocole prédéfinie, une qualité de canal du dispositif terminal est supérieure à un seuil de qualité, la vitesse de déplacement du dispositif terminal est inférieure à un seuil de vitesse prédéfini ou la puissance de transmission restante du dispositif terminal est supérieure à un seuil de puissance, l'information d'état du dispositif terminal étant l'information d'état du second type ; et
une durée de la première séquence de temps de transmission étant plus courte qu'une durée de la seconde séquence de temps de transmission.

14. Dispositif de réseau (400) selon la revendication 8 ou 9, dans lequel :
l'information d'état comprend l'information de configuration de système ; et
l'unité de détermination (420) est spécifiquement configurée pour :
déterminer la séquence de temps de transmission sur la base de l'information de configuration de système, la séquence de temps de transmission étant liée à un type de la configuration de système.

15. Produit de programme qui amène un ordinateur à exécuter le procédé selon l'une quelconque des revendications 1 à 7.
